Europäisches Patentamt

European Patent Office

Office européen des brevets

(11) Numéro de publication : **0 389 318 B1**

(12) **FASCICULE DE BREVET EUROPEEN**

(45) Date de publication du fascicule du brevet :
21.04.93 Bulletin 93/16

(21) Numéro de dépôt : **90400527.9**

(22) Date de dépôt : **26.02.90**

(51) Int. Cl.⁵ : **G01C 21/22**

(54) **Procédé d'aide à la navigation et navigateur terrestre perfectionné.**

(30) Priorité : **27.02.89 FR 8902500**

(43) Date de publication de la demande :
**26.09.90 Bulletin 90/39**

(45) Mention de la délivrance du brevet :
**21.04.93 Bulletin 93/16**

(84) Etats contractants désignés :
**DE ES FR GB IT**

(56) Documents cités :
**EP-A- 0 041 892**
**EP-A- 0 166 547**
**GB-A- 2 042 181**
**GB-A- 2 174 497**

(73) Titulaire : **SOCIETE DE FABRICATION D'INSTRUMENTS DE MESURE (S.F.I.M.)**
**13, avenue Marcel Ramolfo-Garnier**
**F-91344 Massy Cédex (FR)**

(72) Inventeur : **Audren Jean-Thierry**
**14, allée des Genêts**
**F-91940 Les Ulis (FR)**
Inventeur : **Paturel, Yves**
**16, rue du Général de Gaulle**
**F-92290 Chatenay Malabry (FR)**

(74) Mandataire : **Martin, Jean-Jacques et al**
**Cabinet REGIMBEAU 26, Avenue Kléber**
**F-75116 Paris (FR)**

## Description

La présente invention concerne le domaine des dispositifs navigateurs terrestres embarqués sur un mobile.

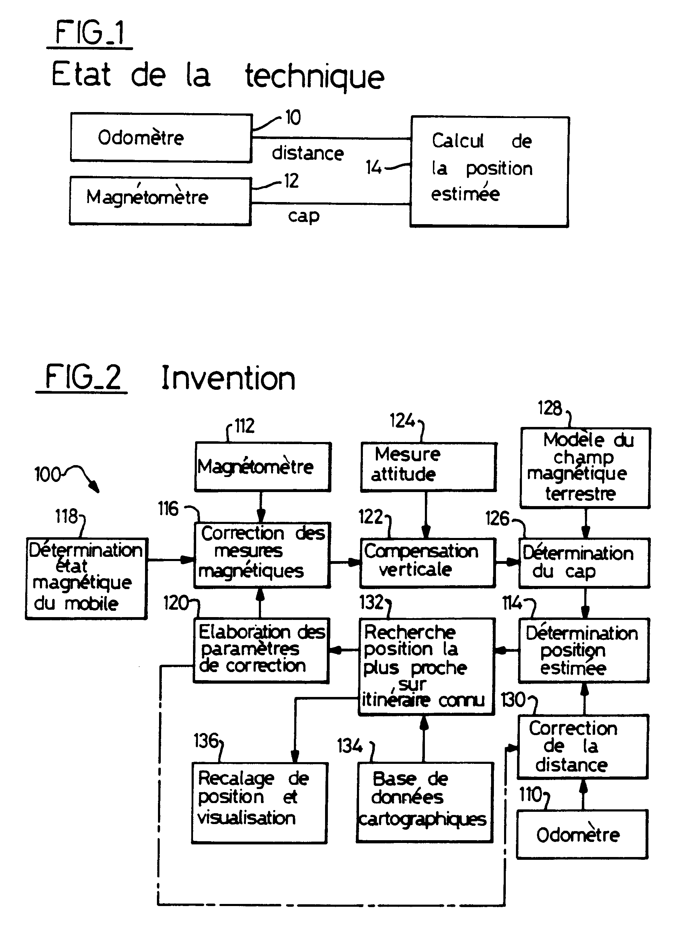

Comme représenté sur la figure 1 annexée, les dispositifs navigateurs terrestres jusqu'ici proposés comprennent généralement des moyens 10 (odomètres) mesurant la distance parcourue à partir d'un point d'origine connu, un magnétomètre 12 sensible au champ géomagnétique, et qui délivre une information représentant le cap, et des moyens 14 d'exploitation aptes à calculer une position estimée du mobile à partir des informations issues des moyens 10 et 12.

Le document GB-A-2042181 décrit un exemple de réalisation de système de navigation à l'estime.

Le document EP-A-0166547 décrit un autre système de navigation à l'estime plus élaboré, recalé par base de donnée cartographique numérique routière.

Ce document EP-A-0166547 décrit un procédé d'aide à la navigation pour un mobile susceptible de se déplacer sur un parcours tout terrain, comprenant les étapes consistant à mesurer la distance parcourue par le mobile à partir d'un point d'origine, à détecter le cap du mobile à l'aide d'un magnétomètre, à définir une position estimée du mobile sur la base des informations de distance et de cap ainsi obtenues, à déterminer, lorsque le mobile se déplace sur une trajectoire connue, la position sur cette trajectoire connue suivie par le mobile, la plus proche de la position estimée, par exploitation d'une base de données cartographiques et à recaler la position estimée sur la position ainsi déterminée.

Le document EP-A-0041892 décrit un procédé de compensation des perturbations magnétiques influençant les mesures d'un dispositif de détermination de cap magnétique, monté sur un véhicule terrestre ou un aéronef, comprenant un magnétomètre fournissant des tensions analogiques proportionnelles aux composantes de champ magnétique terrestre perturbé selon ses axes de référence. Selon ce document, on admet que le lieu du point extrémité du vecteur représentatif du champ est une ellipse pour un véhicule terrestre et une ellipsoïde pour un aéronef, dont l'identification, à partir des tensions analogiques, et la transformation en un cercle ou une sphère centré sur l'origine des axes du magnétomètre, permettent de calculer des coefficients de correction qui sont introduits dans la mémoire d'une unité de calcul associé au magnétomètre afin de définir à tout instant un vecteur faisant avec un axe de référence du magnétomètre un angle correspondant au cap magnétique réel du véhicule ou de l'aéronef.

L'expérience montre que les dispositifs navigateurs terrestres connus, s'ils présentent une bonne efficacité tant qu'ils se déplacent sur des routes ou rues identifiées, génèrent en revanche des erreurs de position importantes lorsqu'ils quittent la route pour un parcours tout terrain.

La présente invention a pour but d'améliorer la précision dans la détermination de position d'un mobile susceptible de se déplacer sur un parcours tout terrain.

Ce but est atteint selon la présente invention grâce à un procédé d'aide à la navigation comprenant les étapes connues consistant à mesurer la distance parcourue à partir d'un point d'origine, à détecter le cap du mobile à l'aide d'un magnétomètre, à définir une position estimée du mobile sur la base des informations de distance et de cap ainsi obtenues, à déterminer, lorsque le mobile se déplace sur une trajectoire connue, la position sur cette trajectoire connue suivie par le mobile, la plus proche de la position estimée, par exploitation d'une base de données cartographiques, et à recaler la position estimée sur la position ainsi déterminée, caractérisé par le fait qu'il comprend en outre les étapes consistant à :

- générer des paramètres de correction des informations issues de l'un au moins des moyens de mesure de distance et du magnétomètre en fonction de l'amplitude et de la direction de l'écart détecté entre la position estimée et la position recalée,, de sorte que les paramètres de correction ainsi générés correspondent à une calibration automatique permanente des perturbations appliquées à l'un au moins des moyens de mesure de distance et du magnétomètre, et
- corriger en permanence les informations issues de l'un au mous des moyens de mesure de distance et du magnétomètre, à l'aide des paramètres de correction, avant exploitation de ces informations pour la détermination de la position estimée.

La présente invention concerne également, pour atteindre le but précité, un dispositif navigateur terrestre embarqué sur un mobile comprenant des moyens de mesure de distance parcourue, un magnétomètre, des moyens d'exploitation sensibles aux informations délivrées par les moyens précités et qui définissent une position estimée, une base de données cartographiques et des moyens permettant, lorsque le mobile se déplace sur un itinéraire connu contenu dans la base de données, de déterminer la position sur l'itinéraire connu suivi par le mobile, la plus proche de la position estimée, et permettant de recaler la position estimée sur la position ainsi déterminée, caractérisé par le fait qu'il comprend en outre :

- des moyens aptes à élaborer des paramètres de correction définis en fonction de l'amplitude et de la direction de l'écart détecté entre la position estimée et la position recalée et correspondant à une calibration automatique permanente des perturbations appliquées à l'un au moins des moyens de mesure de distance et du magnétomètre,

- des moyens aptes à corriger en permanence les informations issues de l'un au moins des moyens de mesure de distance et du magnétomètre, à l'aide des paramètres de correction, avant exploitation de ces informations pour la détermination de la position estimée.

D'autres caractéristiques, buts et avantages de la présente invention apparaîtront à la lecture de la description détaillée qui va suivre, et en regard des dessins annexés et sur lesquels, la figure 1 qui illustre l'état de la technique ayant déjà été décrite,

- la figure 2 représente une vue schématique sous forme de blocs fonctionnels d'un navigateur terrestre conforme à la présente invention,

- la figure 3 illustre schématiquement une étape de recalage de position à l'aide d'une base de données cartographiques, et

- la figure 4 représente schématiquement le logigramme du procédé d'aide à la navigation conforme à la présente invention.

Comme représenté sur la figure 2 annexée, le navigateur terrestre 100 conforme à la présente invention comprend des moyens 114 aptes à déterminer la position estimée du mobile sur la base d'une information représentant la distance parcourue depuis un point d'origine connu et d'une information représentant le cap du mobile.

Cependant, comme représenté sur la figure 2, selon la présente invention, de préférence, l'information de cap issue du magnéto6 mètre 112 n'est pas appliquée directement aux moyens d'exploitation 114.

De même, le cas échéant, l'information distance délivrée par l'odomètre 110, peut ne pas être délivrée directement aux moyens d'exploitation 114.

En effet, selon la présente invention, ces informations font l'objet au préalable de corrections.

Tout d'abord, l'information issue du magnétomètre 112 fait l'objet d'une première correction dans des moyens 116. La correction établie dans ces moyens 116 peut être basée sur deux séries de paramètres. Une première série de paramètres correspondant à l'état magnétique du mobile, est générée par des moyens 118. Ces moyens 118 sont conçus pour contrôler le déplacement, le retrait ou l'adjonction de masse magnétique sur le mobile. Tout déplacement de masse magnétique sur le mobile est en effet susceptible d'influencer la mesure issue du magnétomètre 112. Ces masses magnétiques peuvent être formées par exemple de charges, ou de tourelles rotatives.

La deuxième série de paramètres prise en compte par les moyens 116 est générée par des moyens 120 sur la base de la trajectoire et de la position du mobile. Cette deuxième série de paramètres sera explicitée par la suite. Le signal délivré par les moyens 116 est ensuite appliqué à des seconds moyens de correction 122. Ces moyens 122 établissent une compensation dite de "verticalité" ; c'est-à-dire que les moyens 122 établissent une compensation sur la base d'une information représentant l'attitude de véhicule issue de moyens 124. En d'autres termes, les moyens 122 suppriment l'erreur dûe à la combinaison de la non horizontalité de l'élément du magnétomètre 112 sensible au champ magnétique et de la composante verticale du champ magnétique terrestre. La compensation établie par les moyens 122 est particulièrement importante lorsque le mobile se déplace en tout terrain.

Le signal issu des moyens de compensation 122 est ensuite appliqué à des moyens 126 conçus pour déterminer le cap du mobile. Pour cela, les moyens 126 reçoivent des informations d'un module 128 qui génère des composantes représentant le champ géomagnétique à partir d'un modèle.

L'information de cap issue des moyens 126 est appliquée aux moyens d'exploitation 114.

Par ailleurs, comme représenté sur la figure 2, l'information de distance issue de l'odomètre 110 est appliquée, après passage dans des moyens de correction de distance 130, aux moyens d'exploitation 114.

On explicitera par la suite le but de la correction établie dans les moyens 130.

L'information de position estimée établie dans les moyens d'exploitation 114 est ensuite appliquée à des moyens 132, qui lorsque le mobile se déplace sur un itinéraire connu, une route par exemple, recherche la position sur l'itinéraire connu, la plus proche de la position estimée.

Pour cela, les moyens 132 utilisent les informations issues d'une base de données cartographiques 134 contenant les coordonnées d'itinéraires connus, notamment de routes, sur lesquels le mobile est susceptible de se déplacer.

Lorsque les moyens 132 ont ainsi localisé la position, selon l'itinéraire connu suivi par le mobile, la plus proche de la position estimée, les moyens 132 opèrent un recalage de position en identifiant la position réelle du mobile comme étant la position déterminée la plus proche sur l'itinéraire connu suivi par le mobile, puis les moyens 132 commandent la visualisation de cette position, considérée comme étant la position réelle du mobile, sur les moyens de visualisation 136.

En parallèle, les moyens 132 peuvent appliquer sur les moyens 120 précités (qui établissent la deuxième série de paramètres de correction pour les moyens 116) une information représentant l'écart entre la position estimée déterminée par les moyens 114 et la position localisée la plus proche sur l'itinéraire connu suivi. Ainsi, les moyens 132 et 120 permettent une calibration automatique permanente des perturbations appliquées au magnétomètre 112 et à l'odomètre 110, lorsque le mobile se déplace sur un itinéraire connu, notamment une route, afin de lui conférer une précision accrue lorsqu'il quitte un itinéraire connu, par exemple pour se déplacer en tout terrain.

En d'autres termes, l'analyse de l'écart entre la position estimée et la position réelle sur l'itinéraire connu, en fonction de la trajectoire, permet de calculer en permanence les corrections à effectuer sur les mesures magnétiques issues du magnétomètre 112 et sur les mesures de distance issues de l'odomètre 110. Cette mise à jour permanente des corrections lorsque le véhicule circule sur un itinéraire connu permet d'obtenir un jeu de paramètres de correction précis utilisable dès que le véhicule se déplace en dehors d'un itinéraire connu.

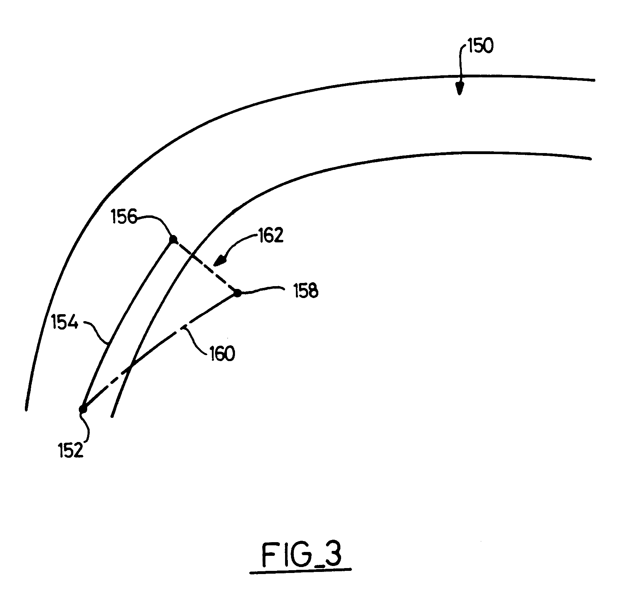

On a schématisé cette correction pour les mesures magnétiques, sur la figure 3 annexée.

On a représenté schématiquement sur la figure 3, sous la référence 150, un itinéraire connu, par exemple une route. Le point d'origine connu est référencé 152. La trajectoire réelle du véhicule est référencée 154. La position réelle du mobile est référencée 156. La position estimée par les moyens 114 est référencée 158. La trajectoire ainsi estimée par le navigateur 100 est référencé 160. L'écart entre la position estimée 158 et la position réelle 156 du mobile est référencée 162.

Les paramètres de correction élaborés par les moyens 120 et appliqués ultérieurement aux mesures magnétiques dans les moyens 116 sont générés sur la base de l'amplitude et de la direction de l'écart 162. Des paramètres similaires de correction à appliquer sur la mesure de distance issue de l'odomètre 110, dans les moyens de correction 130, peuvent être élaborés par les moyens 120, en prenant en compte l'amplitude et la direction d'un écart détecté entre une position estimée 158 et une position réelle sur un itinéraire connu 156.

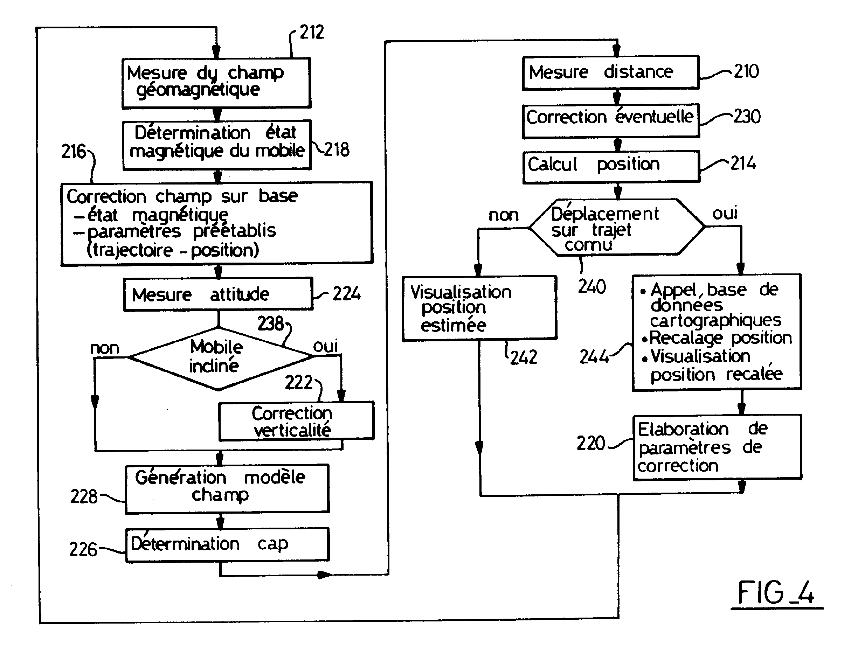

On va maintenant décrire le procédé d'aide à la navigation, conforme à la présente invention, schématisé sur la figure 4.

A l'étape 212 le champ géomagnétique est mesuré à l'aide d'un magnétomètre 112 embarqué sur le mobile. A l'étape 218 on détermine l'état magnétique du mobile, c'est-à-dire tout déplacement, retrait ou adjonction éventuelle de masse magnétique, susceptible d'influencer le magnétomètre 112 par rapport à un état de référence.

A l'étape 216, le navigateur 100 établit une correction de l'information issue du magnétomètre 112 sur la base de l'état magnétique déterminé et, de préférence, en outre, sur la base de paramètres pré-établis à une étape 220 par les moyens 120 précités.

A l'étape 224, le navigateur 100 mesure l'attitude du véhicule. Cette étape 224 est suivie d'une étape 238 de test de l'inclinaison du mobile. Si le mobile est incliné, l'étape 238 est suivie d'une étape de correction de verticalité 222 sur la base de l'information attitude détectée à l'étape 224.

L'étape 222 est suivie d'une étape 228 de génération de composantes représentant le champ géomagnétique 228 à partir d'un modèle.

En revanche, si le mobile n'est pas incliné, l'étape 238 est suivie immédiatement de l'étape 228.

Le cap du mobile est déterminé à l'étape 226 sur la base des composantes du champ géomagnétique généré à l'étape 228 et du champ magnétique détecté par le magnétomètre 112 à l'étape 212, après correction éventuelle aux étapes 216 et 222.

Le cap du mobile étant ainsi déterminé, la distance parcourue est mesurée par l'odomètre 110 à l'étape 210.

Le cas échéant, comme explicité précédemment, l'information distance ainsi obtenue est corrigée à l'étape 230.

Le navigateur 100 procède alors, à l'étape 214, à la détermination de la position estimée du mobile à l'aide des informations distance et cap précitées.

L'étape 214 est suivie d'une étape 240 de test de déplacement du mobile sur un trajet connu.

Par "trajet ou trajectoire connu" on entend dans la présente demande de brevet non pas un trajet ou trajectoire sur lequel il est vérifié que le mobile se déplace, mais un réseau de trajets susceptibles d'être empruntés par le mobile et dont les coordonnées sont mémorisées dans une base de données cartographiques.

Si le mobile ne se déplace pas sur un trajet connu, la position estimée à l'étape 214 est considérée comme étant la position réelle et visualisée sur les moyens 136 à l'étape 242.

En revanche si le mobile se déplace sur un trajet connu, le navigateur 100 procède à l'étape 244, successivement à un appel d'une base de données cartographiques 134 contenant les coordonnées de trajet connu, sur lequel se déplace le mobile, à un recalage de position en déterminant la position sur le trajet connu suivi par le mobile la plus proche de la position estimée à l'étape 214, puis à une visualisation sur les moyens 136 de la position ainsi recalée.

A l'étape 220, le navigateur 100 procède alors à une détermination des paramètres de correction requis pour l'odomètre 110 et le magnétomètre 112, et susceptibles d'être utilisés respectivement par les moyens 130 et 116, sur la base de l'amplitude et de la direction de l'écart détecté entre la position estimée 158 et la position réelle 156 du véhicule.

L'homme de l'art comprendra aisément que le procédé d'aide à la navigation et le navigateur terrestre qui viennent d'être décrits permettent une navigation autonome de tout véhicule terrestre ainsi équipé, sur tout terrain.

La description qui précède et les figures annexées ne sont bien entendu pas limitatives.

On va maintenant décrire un exemple de modélisation du champ magnétique terrestre réalisé par les moyens 128.

Le champ magnétique terrestre varie en fonction des coordonnées géographiques du lieu et en fonction du temps. Le champ magnétique terrestre est représenté par ses trois composantes dans le trièdre géographique local. La modélisation consiste à approximer chacune de ces composantes par un polynôme fonction de la latitude et de la longitude :

$$C = a_0 + a_1 \lambda + a_2 \phi + a_3 \lambda^2 + a_4 \lambda\phi + a_5 \phi^2 + a_6 \lambda^3 + a_7 \lambda^2 \phi + a_8 \lambda\phi^2 + a_9 \phi^3 + K.h$$

avec :

$C$ : composante modelisée

$a_0, a_1, a_2, a_3, a_4, a_5, a_6, a_7, a_8, a_9$ : coefficients du modèle

$\lambda$ : longitude

$\phi$ : latitude

$K$ : coefficient de correction d'altitude

$h$ : altitude du lieu par rapport au niveau de la mer.

Ces coefficients $a_i$ et $K$ sont déterminés sur des zones de dimensions réduites (1000 km x 1000 km) ; ainsi chaque zone dispose d'un jeu de coefficients.

Par ailleurs, afin de tenir compte de la variation séculaire, chacun des coefficients $a_i$ est lui-même une fonction du temps :

$$a_i(t) = a_i(t_0) + \mathring{a}_i(t - t_0).$$

Ainsi à partir de la connaissance de la date et de la position du véhicule il est possible de reconstituer chacune des composantes du champ magnétique terrestre.

On va maintenant décrire un exemple préférentiel d'estimation automatique d'un modèle de perturbation magnétique du véhicule.

Le vecteur "champ magnétique théorique" déterminé grâce au modèle de champ magnétique terrestre par les moyens 128 et le vecteur "champ magnétique mesuré" issu du magnétomètre 112, éventuellement corrigé en fonction de l'attitude du véhicule, sont comparés. La différence de module entre ces deux vecteurs est influencée par :

- la distorsion du champ magnétique terrestre par les masses métalliques du véhicule,
- l'erreur du champ magnétique théorique par rapport au champ magnétique réel. Cette erreur est liée d'une part à la précision du modèle et d'autre part à des anomalies locales non prises en compte par le modèle.

La distorsion liée aux masses métalliques fixes du véhicule est mesurée lors d'une procédure de calibration, lors de l'installation du magnétomètre sur le véhicule. Par contre, les variations de positionnement de masses métalliques importantes depuis la calibration induisent une distorsion qui est estimée automatiquement lors du roulage du véhicule. Cette distorsion étant liée au véhicule suit les mouvements du véhicule.

L'erreur de modélisation du champ est fixe dans les axes géographiques et est indépendante du véhicule.

Le processus d'estimation automatique cherche à estimer en permanence les paramètres suivants :

$$\left.\begin{aligned} B_x &= \\ B_y &= \\ B_z &= \end{aligned}\right\} \text{composantes du vecteur magnétique dans les axes du véhicules}$$

$b$ : erreur entre le module du champ magnétique terrestre réel et le module du champ magnétique terrestre restitué par le modèle.

Ces quatre paramètres sont déterminés en permanence grâce à un filtre de type Kalman dont le vecteur des variables d'état est constitué de ces quatre paramètres et dont le vecteur mesure est constitué par la différence de module entre le vecteur du champ magnétique mesuré et le vecteur du champ magnétique restitué par le modèle.

On va maintenant décrire un exemple préférentiel de l'estimation automatique du modèle d'erreur de l'odomètre.

La position estimée est déterminée par les moyens 114 (voir figure 2).

L'utilisation de la base de données cartographiques 134 permet lorsque le véhicule suit un trajet routier répertorié sur la carte de déterminer la position la plus probable du véhicule. La différence entre ces deux estimations de la position est utilisée pour déterminer automatiquement le modèle d'erreur de l'odomètre par un traitement dans un filtre de type Kalman.

Le vecteur mesure du filtre est constitué par :

$d_x$ : différence des coordonnées X entre les deux estimations de position.

$d_y$ : différence des coordonnées Y entre les deux estimations de position.

Le vecteur d'état associé à ce filtre est :

$\varepsilon_x$ : recalage à effectuer sur coordonnée position X

$\varepsilon_y$ : recalage à effectuer sur coordonnée position Y

$\varepsilon\psi$ : recalage de cap à effectuer

$\varepsilon_k$ : erreur sur facteur d'échelle de l'odomètre.

A partir du vecteur mesure, de la matrice d'évolution du vecteur d'état déterminée par les lois de la cinématique et les évolutions mesurées du véhicule, le vecteur d'état et en particulier l'erreur sur le facteur d'échelle de l'odomètre est déterminé en permanence.

On notera que la présente invention n'est pas limitée à la combinaison de la totalité des corrections précitées : en fonction de l'état magnétique du mobile, de l'attitude du mobile, en fonction d'un modèle du champ magnétique terrestre, par comparaison avec une base de données cartographiques, et par exploitation de paramètres de correction, pour le magnétomètre 112 et l'odomètre 110, sur la base de l'écart détecté entre une position estimée et une position réelle sur trajectoire connu. Les moyens de correction 130 sur l'odomètre 110 peuvent être omis. La présente invention est défini dans le jeu de revendications annexé.

**Revendications**

1. Procédé d'aide à la navigation pour un mobile susceptible de se déplacer sur un parcours tout terrain, comprenant les étapes connues consistant à mesurer (210) la distance parcourue par le mobile à partir d'un point d'origine, à détecter (212) le cap du mobile à l'aide d'un magnétomètre (112), à définir (214) une position estimée du mobile sur la base des informations de distance et de cap ainsi obtenues, à déterminer, lorsque le mobile se déplace sur une trajectoire connue, la position sur cette trajectoire connue suivie par le mobile, la plus proche de la position estimée, par exploitation d'une base de données cartographiques (134), et à recaler la position estimée sur la position ainsi déterminée, caractérisé par le fait qu'il comprend en outre les étapes consistant à :
   - générer des paramètres de correction des informations issues de l'un au moins des moyens de mesure de distance (110) et du magnétomètre (112), en fonction de l'amplitude et de la direction de l'écart détecté entre la position estimée et la position recalée, de sorte que les paramètres de correction ainsi générés correspondent à une calibration automatique permanente des perturbations appliquées à l'un au moins des moyens de mesure de distance (110) et du magnétomère (112), et
   - corriger en permanence les informations issues de l'un au moins des moyens de mesure de distance (110) et du magnétomètre (112), à l'aide des paramètres de correction, avant exploitation (214) de ces informations pour la détermination de la position estimée.

2. Procédé d'aide à la navigation selon la revendication 1, caractérisé par le fait qu'il comprend en outre une étape de correction qui comprend la mesure (224) de l'attitude du mobile et une compensation (222) de verticalité de l'information issue du magnétomètre (112) en fonction de l'attitude du mobile.

3. Procédé d'aide à la navigation selon l'une des revendications 1 ou 2, caractérisé par le fait qu'il comprend en outre une étape de correction qui comprend la génération (228) de composantes représentant le champ magnétique sur la base d'un modèle et la détermination (226) sur cette base du cap du mobile.

4. Procédé d'aide à la navigation selon la revendication 3, caractérisé par le fait que le modèle de champ magnétique est défini par approximation de chacune des trois composantes du champ dans le trièdre géographique local par un polynôme fonction de la latitude et de la longitude.

5. Procédé d'aide à la navigation selon la revendication 4, caractérisé par le fait que le polynôme tient compte de l'altitude du mobile.

**6.** Procédé d'aide à la navigation selon l'une des revendications 4 ou 5, caractérisé par le fait que le polynôme est de la forme :

$$C = a_0 + a_1 \lambda + a_2 \phi + a_3 \lambda^2 + a_4 \lambda\phi + a_5 \phi^2 + a_6 \lambda^3 + a_7 \lambda^2 \phi + a_8 \lambda\phi^2 + a_9 \phi^3 + K.h$$

avec :

C : composante modelisée

$a_0, a_1, a_2, a_3, a_4, a_5, a_6, a_7, a_8, a_9$ : coefficients du modèle

$\lambda$ : longitude

$\phi$ : latitude

K : coefficient de correction d'altitude

h : altitude du lieu par rapport au niveau de la mer.

**7.** Procédé d'aide à la navigation selon la revendication 6, caractérisé par le fait que chaque coefficient $a_0$ à $a_9$ est lui-même fonction du temps.

**8.** Procédé d'aide à la navigation selon l'une des revendications 6 ou 7, caractérisé par le fait que chaque coefficient $a_0$ à $a_9$ est de la forme :

$$a_i(t) = a_i(t_0) + \mathring{a}_i(t - t_0).$$

**9.** Procédé d'aide à la navigation selon l'une des revendications 1 à 8 prises en combinaison avec la revendication 3, caractérisé par le fait que les paramètres de correction sont définis sur la base de l'erreur entre le module champ magnétique mesuré et le module du champ magnétique restitué par un modèle.

**10.** Procédé d'aide à la navigation selon la revendication 9, caractérisé par le fait que les paramètres de correction sont définis dans un filtre de type Kalman dans lequel les variables d'état sont formés des paramètres suivants :

$$\left. \begin{array}{l} B_x = \\ B_y = \\ B_z = \end{array} \right\} \text{composantes du vecteur magnétique dans les axes du véhicules}$$

b : erreur entre le module du champ magnétique terrestre réel et module du champ magnétique terrestre restitué par le modèle,

tandis que le vecteur mesure est constitué par la différence de module entre le vecteur du champ magnétique mesuré et le vecteur du champ magnétique restitué par le modèle.

**11.** Procédé d'aide à la navigation selon l'une des revendications 1 à 10, caractérisé par le fait que les paramètres de correction sont définis dans un filtre de type Kalman dans lequel le vecteur mesure est constitué par

$d_x$ : différence des coordonnées X entre les deux estimations de position,

$d_y$ : différence des coordonnées Y entre les deux estimations de position,

dans lequel le vecteur d'état associé à ce filtre est :

$\varepsilon_x$       : recalage à effectuer sur coordonnée X

$\varepsilon_y$       : recalage à effectuer sur coordonnée Y

$\varepsilon\psi$       : recalage de cap à effectuer

$\varepsilon_k$       : erreur sur facteur d'échelle de l'odomètre.

**12.** Procédé d'aide à la navigation selon l'une des revendications 1 à 11, caractérisé par le fait qu'il comprend en outre une étape de correction qui comprend la détermination de l'état magnétique du véhicule (218) et la correction du signal issu du magnétomètre (112) sur cette base.

**13.** Dispositif navigateur terrestre embarqué sur un mobile susceptible de se déplacer sur un parcours tout terrain, comprenant des moyens de mesure de distance parcourue (110), un magnétomètre (112), des moyens d'exploitation (114) sensibles aux informations délivrées par les moyens précités et qui définissent une position estimée du mobile, une base de données cartographiques (134) et des moyens (132) permettant, lorsque le mobile se déplace sur un itinéraire connu contenu dans la base de données (134), de déterminer la position sur l'itinéraire connu suivi par le mobile, la plus proche de la position estimée, et permettant de recaler la position estimée sur la position ainsi déterminée, caractérisé par le fait qu'il comprend en outre

- des moyens (120) aptes à élaborer des paramètres de correction définis en fonction de l'amplitude et de la direction de l'écart détecté entre la position estimée et la position recalée et correspondant à une calibration automatique permanente des perturbations appliquées à l'un au moins des moyens de mesure de distance (110) et du magnétomètre (112), et
- des moyens (116, 122, 126, 132) aptes à corriger en permanence les informations issues de l'un au moins des moyens de mesure de distance (110) et du magnéto mètre (112), à l'aide des paramètres de correction, avant exploitation de ces informations pour la détermination de la position estimée.

14. Dispositif navigateur selon la revendication 13, caractérisé par le fait qu'il comprend des moyens (124) de mesure d'attitude du mobile et des moyens (122) de compensation de verticalité des informations issues du magnétomètre (112).

15. Dispositif navigateur selon l'une des revendications 13 et 14, caractérisé par le fait qu'il comprend des moyens (128) générant des composantes qui représentent le champ géomagnétique sur la base d'un modèle, et des moyens (126) aptes à déterminer le cap du mobile sur la base des informations issues du magnétomètre (112) et du modèle de champ géomagnétique.

16. Dispositif navigateur selon la revendication 15, caractérisé par le fait que le modèle de champ magnétique est défini par approximation de chacune des trois composantes du champ dans le trièdre géographique local par un polynôme fonction de la latitude et de la longitude.

17. Dispositif navigateur selon la revendication 16, caractérisé par le fait que le polynôme tient compte de l'altitude du mobile.

18. Dispositif navigateur selon l'une des revendications 16 ou 17, caractérisé par le fait que le polynôme est de la forme :

$$C = a_0 + a_1 \lambda + a_2 \phi + a_3 \lambda^2 + a_4 \lambda\phi + a_5 \phi^2 + a_6 \lambda^3 + a_7 \lambda^2 \phi + a_8 \lambda\phi^2 + a_9 \phi^3 + K.h$$

avec :

C : composante modelisée

$a_0, a_1, a_2, a_3, a_4, a_5, a_6, a_7, a_8, a_9$ : coefficients du modèle

$\lambda$ : longitude

$\phi$ : latitude

K : coefficient de correction d'altitude

h : altitude du lieu par rapport au niveau de la mer.

19. Dispositif navigateur selon la revendication 18, caractérisé par le fait que chaque coefficient $a_0$ à $a_9$ est lui-même fonction du temps.

20. Dispositif navigateur selon l'une des revendications 18 ou 19, caractérisé par le fait que chaque coefficient $a_0$ à $a_9$ est de la forme :

$$a_I(t) = a_I(t_0) + \mathring{a}_I(t - t_0).$$

21. Dispositif navigateur selon l'une des revendications 13 à 20 prise en combinaison avec la revendication 15, caractérisé par le fait que les paramètres de correction sont définis sur la base de l'erreur entre le module champ magnétique mesuré et le module du champ magnétique restitué par un modèle.

22. Dispositif navigateur selon la revendication 21, caractérisé par le fait que les moyens élaborant les paramètres de correction comprennent un filtre de type Kalman dans lequel les variables d'état sont formés des paramètres suivants :

$$\left. \begin{array}{l} B_x = \\ B_y = \\ B_z = \end{array} \right\} \text{composantes du vecteur magnétique dans les axes du véhicules}$$

b : erreur entre le module du champ magnétique terrestre réel et module du champ magnétique terrestre restitué par le modèle, tandis que le vecteur mesure est constitué par la différence de module entre le vecteur du champ magnétique mesuré et le vecteur du champ magnétique restitué par le modèle.

23. Dispositif navigateur selon l'une des revendications 13 à 22, caractérisé par le fait que les moyens élaborant les paramètres de correction comprennent un filtre de type Kalman dans lequel le vecteur mesure est constitué par

$d_x$ : différence des coordonnées X entre les deux estimations de position,

$d_y$ : différence des coordonnées Y entre les deux estimations de position,

dans lequel le vecteur d'état associé à ce filtre est :

$\varepsilon_x$ : recalage à effectuer sur coordonnée X

$\varepsilon_y$ : recalage à effectuer sur coordonnée Y

$\varepsilon\psi$ : recalage de cap à effectuer

$\varepsilon_k$ : erreur sur facteur d'échelle de l'odomètre.

24. Dispositif navigateur selon l'une des revendications 13 à 23, caractérisé par le fait qu'il comprend des moyens (116) aptes à corriger l'information issue du magnétomètre (112) sur la base d'informations correspondant à l'état magnétique du mobile.

## Patentansprüche

1. Verfahren zur Navigationshilfe für ein zur Fortbewegung entlang eines Weges in beliebigem Gelände fähiges Fahrzeug mit den bekannten Schritten:
   - Messen (210) der von dem Fahrzeug von einem Ausgangspunkt aus zurückgelegten Wegstrecke,
   - Detektieren (212) des Fahrzeugkurses mit Hilfe eines Magnetometers (112),
   - Festlegen (214) einer geschätzten Position des Fahrzeuges auf der Basis der so erhaltenen Informationen über die Wegstrecke und den Kurs,
   - Bestimmen der der geschätzten Position am nächsten liegenden Position auf einer bekannten, von dem Fahrzeug verfolgten Trajektorie, wenn sich das Fahrzeug entlang der bekannten Trajektorie fortbewegt, unter Auswertung einer Basis kartographischer Daten (134) und
   - Richtigstellen der geschätzten Position in die auf diese Weise bestimmte Position,
   dadurch gekennzeichnet, daß es des weiteren folgende Schritte aufweist:
   - Erzeugen von Korrekturparametern für die von wenigstens einem der Mittel zur Wegstreckenmessung (110) und des Magnetometers (112) erhaltenen Informationen als Funktion der Amplitude und der Richtung der detektierten Abweichung zwischen der geschätzten Position und der richtiggestellten Position, so daß die derart erzeugen Korrekturparameter für eine permanente automatische Berichtigung von auf wenigstens eines der Mittel zur Wegstreckenmessung (110) und des Magnetometers (112) einwirkenden Störungen geeignet sind, und
   - andauerndes Korrigieren der von wenigstens einem der Mittel zur Wegstreckenmessung (110) und des Magnetometers (112) erhaltenen Informationen mit Hilfe der Korrekturparameter vor Auswertung (214) dieser Informationen für die Bestimmung der geschätzten Position.

2. Verfahren zur Navigationshilfe nach Anspruch 1, dadurch gekennzeichnet, daß es des weiteren einen Korrekturschritt enthält, der die Messung (224) der Fahrzeuglage und eine Vertikalkorrektur (222) der vom Magnetometer (112) erhaltenen Information als Funktion der Fahrzeuglage beinhaltet.

3. Verfahren zur Navigationshilfe nach Anspruch 1 oder 2, dadurch gekennzeichnet, daß es des weiteren einen Korrekturschritt enthält, der die Erzeugung (228) von das Magnetfeld repräsentierenden Komponenten auf der Basis eines Modells und die Bestimmung (226 ) des Fahrzeugkurses auf dieser Basis beinhaltet.

4. Verfahren zur Navigationshilfe nach Anspruch 3, dadurch gekennzeichnet, daß das Modell des Magnetfeldes mittels Approximation jeder der drei Komponenten des Feldes im lokalen geographischen Dreibein durch eine Polynomfunktion der Breite und der Länge festgelegt ist.

5. Verfahren zur Navigationshilfe nach Anspruch 4, dadurch gekennzeichnet, daß das Polynom die Höhe des Fahrzeugs berücksichtigt.

6. Verfahren zur Navigationshilfe nach Anspruch 4 oder 5, dadurch gekennzeichnet, daß das Polynom von folgender Form ist:

$$C = a_0 + a_1 \lambda + a_2 \phi + a_3 \lambda^2 + a_4 \lambda\phi + a_5 \phi^2 + a_6 \lambda^3 + a_7 \lambda^2\phi + a_8 \lambda\phi^2 + a_9 \phi^3 + K.h$$

mit:

C: Modellkomponente

$a_0, a_1, a_2, a_3, a_4, a_5, a_6, a_7, a_8, a_9$: Modellkoeffizienten

$\lambda$: Länge

$\phi$: Breite

K: Koeffizient für die Höhenkorrektur

h: örtliche Höhe bezogen auf Meereshöhe.

7. Verfahren zur Navigationshilfe nach Anspruch 6, dadurch gekennzeichnet, daß jeder Koeffizient $a_0$ bis $a_9$ selbst eine Funktion der Zeit ist.

8. Verfahren zur Navigationshilfe nach Anspruch 6 oder 7, dadurch gekennzeichnet, daß jeder Koeffizient $a_0$ bis $a_9$ von folgender Form ist:

$$a_i(t) = a_i(t_0) + \mathring{a}_i(t - t_0) .$$

9. Verfahren zur Navigationshilfe nach einem der Ansprüche 1 bis 8 in Verbindung mit Anspruch 3, dadurch gekennzeichnet, daß die Korrekturparameter auf der Basis des Fehlers zwischen dem Betrag des gemessenen Magnetfeldes und dem Betrag des durch ein Modell rekonstruierten Magnetfeldes festgelegt werden.

10. Verfahren zur Navigationshilfe nach Anspruch 9, dadurch gekennzeichnet, daß die Korrekturparameter in einem Filter vom Kalmantyp festgelegt werden, in dem die Zustandsvariablen von folgenden Parametern gebildet werden:

$$\begin{aligned} B_x &= \\ B_y &= \\ B_z &= \end{aligned} \left. \right\} \text{Komponenten des magnetischen Vektors bezüglich der Achsen des Fahrzeugs}$$

b: Fehler zwischen dem Betrag des tatsächlichen Erdmagnetfeldes und dem Betrag des vom Modell rekonstruierten Erdmagnetfeldes, wobei der Meßvektor durch die Betragsdifferenz zwischen dem gemessenen Magnetfeldvektor und dem vom Modell rekonstruierten Magentfeldvektor gebildet ist.

11. Verfahren zur Navigationshilfe nach einem der Ansprüche 1 bis 10, dadurch gekennzeichnet, daß die Korrekturparameter in einem Filter vom Kalmantyp festgelegt werden, in dem der Meßvektor besteht aus:

$d_x$: Differenz der Koordinaten X zweier Positionsschätzungen,

$d_y$: Differeaz der Koordinaten Z zweier Positionsschätzungen,

und in dem der mit diesem Filter verbundene Zustandsvektor der folgende ist:

$\varepsilon_x$ : Einflußkorrektur auf die Koordinate X

$\varepsilon_y$ : Einflußkorrektur auf die Koordinate Y

$\varepsilon\psi$ : Eintlußkorrektur des Kurses

$\varepsilon_k$ : Fehler beim Maßstabsfaktor des Wegstreckenmessers.

12. Verfahren zur Navigationshilfe nach einem der Ansprüche 1 bis 11, dadurch gekennzeichnet, daß es des weiteren einen Korrekturschritt aufweist, der die Bestimmung des magnetischen Zustands des Fahrzeugs (218) und die Korrektur des vom Magnetometer (112) erhaltenen Signals auf dieser Basis beinhaltet.

13. Terrestrische Navigationsvorrichtung, die sich auf einem Fahrzeug befindet, das zur Fortbewegung entlang eines Weges in beliebigem Gelände fähig ist, mit Mitteln zur Messung der zurückgelegten Wegstrecke (110), einem Magnetometer (112), Auswertemitteln (114), die von den vorerwähnten Mitteln abgegebene Informationen erfassen und eine geschätzte Fahrzeugposition festlegen, einer Basis kartographischer Daten (134) und Mitteln (132), die es, wenn sich das Fahrzeug entlang eines bekannten, in der Datenbasis (134) enthaltenen Weges fortbewegt, erlauben, die der geschätzten Position nächstgelegene Position auf dem von dem Fahrzeug verfolgten, bekannten Weg zu bestimmen und es gestatten, die geschätzte Position in die so bestimmte Position richtigzustellen, dadurch gekennzeichnet, daß sie des weiteren enthält:

- Mittel (120), die zur Verarbeitung von Korrekturparametern fähig sind, die als Funktion der Amplitude und der Richtung der detektierten Abweichung zwischen der geschätzten Position und der richtiggestellten Position festgelegt und für eine andauernde automatische Berichtigung von auf wenigstens eines der Mittel zur Wegstreckenmessung (110) und des Magnetometers (112) einwirkenden Störungen geeignet sind, und

- Mittel ( 116, 122, 126, 132 ), die zum andauernden Korrigieren der von wenigstens einem der Mittel zur Wegstreckenmessung (110) und des Magnetometers (112) erhaltenen Informationen mit Hilfe der Korrekturparameter vor Auswertung dieser Informationen für die Bestimmung der geschätzten Position fähig sind.

14. Navigationsvorrichtung nach Anspruch 13, dadurch gekennzeichnet, daß sie Mittel (124) zur Höhenmessung für das Fahrzeug und Mittel (122) zur Vertikalkompensation der vom Magnetometer (112) erhaltenen Informationen enthält.

15. Navigationsvorrichtung nach Anspruch 13 oder 14, dadurch gekennzeichnet, daß sie Mittel (128), die Komponenten erzeugen, welche das Erdmagnetfeld auf der Basis eines Modells repräsentieren, sowie Mittel (126) enthält, die dazu fähig sind, den Fahrzeugkurs auf der Basis der vom Magnetometer ( 112 ) und vom Modell des Erdmagnetfeldes erhaltenen Informationen zu bestimmen.

16. Navigationsvorrichtung nach Anspruch 15, dadurch gekennzeichnet, daß das Modellmagnetfeld durch Approximation jeder der drei Feldkomponenten im lokalen geographischen Dreibein durch eine Polynomfunktion der Breite und der Länge festgelegt ist.

17. Navigationsvorrichtung nach Anspruch 16, dadurch gekennzeichnet, daß das Polynom die Höhe des Fahrzeugs berücksichtigt.

18. Navigationsvorrichtung nach Anspruch 16 oder 17, dadurch gekennzeichnet, daß das Polynom von folgender Form ist:

$$C = a_0 + a_1 \lambda + a_2 \phi + a_3 \lambda^2 + a_4 \lambda\phi + a_5 \phi^2 + a_6 \lambda^3 + a_7 \lambda^2 \phi + a_8 \lambda\phi^2 + a_9 \phi^3 + K.h$$

mit:

C: Modellkomponente

$a_0, a_1, a_2, a_3, a_4, a_5, a_6, a_7, a_8, a_9$: Modellkoeffizienten

$\lambda$: Länge

$\phi$: Breite

K: Koeffizient für die Höhenkorrektur

h: örtliche Höhe bezogen auf Meereshöhe.

19. Navigationsvorrichtung nach Anspruch 18, dadurch gekennzeichnet, daß jeder Koeffizient $a_0$ bis $a_9$ selbst eine Funktion der Zeit ist.

20. Navigationsvorrichtung nach Anspruch 18 oder 19, dadurch gekennzeichnet, daß jeder Koeffizient $a_0$ bis $a_9$ von folgender Form ist:

$$a_i(t) = a_i(t_0) + \dot{a}_i(t - t_0) .$$

21. Navigationsvorrichtung nach einem der Ansprüche 13 bis 20 in Verbindung mit Anspruch 15, dadurch gekennzeichnet, daß die Korrekturparameter auf der Basis des Fehlers zwischen dem Betrag des gemessenen Magentfeldes und dem Betrag des durch ein Modell rekonstruierten Magnetfeldes festgelegt werden.

22. Navigationsvorrichtung nach Anspruch 21, dadurch gekennzeichnet, daß die die Korrekturparameter verarbeitenden Mittel einen Filter vom Kalmantyp enthalten, in dem die Zustandsvariablen von folgenden Parametern gebildet werden:

$$\left.\begin{array}{l} B_x = \\ B_y = \\ B_z = \end{array}\right\} \text{Komponenten des magnetischen Vektors bezüglich der Achsen des Fahrzeugs}$$

b: Fehler zwischen dem Betrag des tatsächlichen Erdmagnetfeldes und dem Betrag des vom Modell rekonstruierten Erdmagnetfeldes, wobei der Meßvektor durch die Betragsdifferenz zwischen dem gemessenen Magentfeldvektor und dem vom Modell rekonstruierten Magnetfeldvektor gebildet ist.

23. Navigationsvorrichtung nach einem der Ansprüche 13 bis 22, dadurch gekennzeichnet, daß die die Korrekturparameter verarbeitenden Mittel ein Filter vom Kalmantyp enthalten, in dem der Meßvektor besteht aus:

$d_x$: Differenz der Koordinaten X zweier Positionsschätzungen,

$d_y$ Differenz der Koordinaten Z zweier Positionsschätzungen,

und in dem der mit diesem Filter verbundene Zustandsvektor der folgende ist:

$\varepsilon_x$ : Einflußkorrektur auf die Koordinate X

$\varepsilon_y$ : Einflußkorrektur auf die Koordinate Y

$\varepsilon\psi$ : Einflußkorrektur des Kurses

$\varepsilon_k$ : Fehler beim Maßstabsfaktor des Wegstreckenmessers.

24. Navigationsvorrichtung nach einem der Ansprüche 13 bis 23, dadurch gekennzeichnet, daß sie Mittel (116) enthält, die dazu fähig sind, die vom Magnetometer (112) erhaltene Information auf der Basis von dem magnetischen Zustand des Fahrzeugs entsprechenden Informationen zu korrigieren.

## Claims

1. Navigation aid method for a moving body capable of moving on an all-terrain route, comprising the known stages consisting of measuring (210) the distance travelled by the moving body from a starting point, detecting (212) the heading of the moving body by means of a magnetometer (112), defining (214) an estimated position of the moving body on the basis of the distance and heading data thus obtained, determining, when the moving body moves on a known path, the position on this known path followed by the moving body which is closest to the estimated position by using a cartographic data base (134), and readjusting the estimated position to the position thus determined, characterised by the fact that it also comprises the stages consisting of:
   - generating correction parameters for the data originating from at least one of the distance measuring means (110) and the magnetometer (112), as a function of the amplitude and direction of the difference detected between the estimated position and the adjusted position, so that the correction parameters thus generated correspond to a continuous automatic calibration of the perturbations applied to at least one of the distance measuring means (110) and of the magnetometer (112), and
   - continuously correcting the data originating from at least one of the distance measuring means (110) and the magnetometer (112), by means of the correction parameters, before the use (214) of these data for determining the estimated position.

2. Navigation aid method according to Claim 1, characterised by the fact that it also comprises a correction stage which comprises the measurement (224) of the attitude of the moving body and a compensation (222) for verticality in the data coming from the magnetometer (112) as a function of the attitude of the moving body.

3. Navigation aid method according to one of Claims 1 or 2, characterised by the fact that it also comprises a correction stage which comprises the generation (228) of components representing the magnetic field on the basis of a model and the determination (226), on this basis, of the heading of the moving body.

4. Navigation aid method according to Claim 3, characterised by the fact that the magnetic field model is defined by approximating each of the three components of the field in the local geographical trihedron by means of a polynomial which is a function of the latitude and longitude.

5. Navigation aid method according to Claim 4, characterised by the fact that the polynomial takes account of the altitude of the moving body.

6. Navigation aid method according to one of Claims 4 or 5, characterised by the fact that the polynomial is of the form:

$$C = a_0 + a_1\lambda + a_2\phi + a_3\lambda^2 + a_4\lambda\phi + a_5\phi^2 + a_6\lambda^3 + a_7\lambda^2\phi + a_8\lambda\phi^2 + a_9\phi^3 + K.h$$

where:

C: modelled component

$a_0, a_1, a_2, a_3, a_4, a_5, a_6, a_7, a_8, a_9$: coefficients of the model

$\lambda$: longitude

$\phi$: latitude

K: altitude correction factor

h: altitude of the place with respect to sea level.

7. Navigation aid method according to Claim 6, characterised by the fact that each coefficient $a_0$ to $a_9$ is itself a function of time.

8. Navigation aid method according to one of Claims 6 or 7, characterised by the fact that each coefficient $a_0$ to $a_9$ is of the form:

$$a_i(t) = a_i(t_0) + \mathring{a}_i(t - t_0).$$

9. Navigation aid method according to one of Claims 1 to 8 taken in combination with Claim 3, characterised by the fact that the correction parameters are defined on the basis of the error between the magnetic field modulus measured and the magnetic field modulus returned by a model.

10. Navigation aid method according to Claim 9, characterised by the fact that the correction parameters are defined in a Kalman type filter in which the state variables are formed from the following parameters:

$$B_x = )$$
$$B_y = ) \text{ components of the magnetic vector in the axes of the}$$
$$B_z = ) \text{ vehicles}$$

b: error between the actual terrestrial magnetic field modulus and the terrestrial magnetic field modulus returned by the model,
whilst the measured vector consists of the difference in modulus between the measured magnetic field vector and the vector of the magnetic field returned by the model.

11. Navigation aid method according to one of Claims 1 to 10, characterised by the fact that the correction parameters are defined in a Kalman type filter in which the measured vector consists of
$d_x$: difference in the X coordinates between the two position estimates,
$d_y$: difference in the Y coordinates between the two position estimates, in which the state vector associated with this filter is:
$\varepsilon_x$ : adjustment to be made on the X axis
$\varepsilon_y$ : adjustment to be made on the Y axis
$\varepsilon_\psi$ : heading adjustment to be made
$\varepsilon_k$ : error on the odometer scale factor.

12. Navigation aid method according to one of Claims 1 to 11, characterised by the fact that it also comprises a correction stage which comprises the determination of the magnetic state of the vehicle (218) and the correction of the signal coming from the magnetometer (112) on this basis.

13. Terrestrial navigation device on board a moving body able to move on an all-terrain route, comprising means for measuring the distance travelled (110), a magnetometer (112), processing means (114) sensitive to the data delivered by the aforesaid means and which define an estimated position of the moving body, a cartographic database (134) and means (132) making it possible, when the moving body is moving on a known route contained in the database (134), to determine the position on the known route followed by the moving body which is the closest to the estimated position, and enabling the estimated position to be adjusted to the position thus determined, characterised by the fact that it also comprises

- means (120) suitable for working out correction parameters defined as a function of the amplitude and direction of the difference detected between the estimated position and the adjusted position and corresponding to a continuous automatic calibration of the perturbations applied to at least one of the distance measuring means (110) and the magnetometer (112), and
- means (116, 112, 126, 132) suitable for continuously correcting the data coming from at least one of the distance measuring means (110) and the magnetometer (112), using correction parameters, before use of these data for determining the estimated position.

14. Navigation device according to Claim 13, characterised by the fact that it comprises means (124) for measuring the attitude of the moving body and means (122) for compensating for verticality in the data coming from the magnetometer (112).

15. Navigation device according to one of Claims 13 and 14, characterised by the fact that it comprises means (128) generating components which represent the magnetic field on the basis of a model, and means (126) suitable for determining the heading of the moving body on the basis of the data coming from the magnetometer (112) and the geomagnetic field model.

16. Navigation device according to Claim 15, characterised by the fact that the magnetic field model is defined by approximation of each of the three components of the field in the local geographical trihedron by means of a polynomial which is a function of the latitude and longitude.

17. Navigation device according to Claim 16, characterised by the fact that the polynomial takes account of the altitude of the moving body.

18. Navigation device according to one of Claims 16 or 17, characterised by the fact that the polynomial is of the form:

$$C = a_0 + a_1\lambda + a_2\phi + a_3\lambda^2 + a_4\lambda\phi + a_5\phi^2 + a_6\lambda^3 + a_7\lambda^2\phi + a_8\lambda\phi^2 + a_9\phi^3 + K.h$$

where:

C: modelled component

$a_0, a_1, a_2, a_3, a_4, a_5, a_6, a_7, a_8, a_9$: coefficients of the model

$\lambda$: longitude

$\phi$: latitude

K: altitude correction factor

h: altitude of the place with respect to sea level.

19. Navigation device according to Claim 18, characterised by the fact that each coefficient $a_0$ to $a_9$ is itself a function of time.

20. Navigation device according to one of Claims 18 or 19, characterised by the fact that each coefficient $a_0$ to $a_9$ is of the form:

$$a_i(t) = a_i(t_0) + \mathring{a}_i(t - t_0).$$

21. Navigation device according to one of Claims 13 to 20 taken in combination with Claim 15, characterised by the fact that the correction parameters are defined on the basis of the error between the magnetic field modulus measured and the magnetic field modulus returned by a model.

22. Navigation device according to Claim 21, characterised by the fact that the correction parameters are defined in a Kalman type filter in which the state variables are formed from the following parameters:

$B_x = )$

$B_y = )$ components of the magnetic vector in the axes of the

$B_z = )$ vehicles

b: error between the actual terrestrial magnetic field modulus and the terrestrial magnetic field modulus returned by the model,
whilst the measured vector consists of the difference in modulus between the measured magnetic field vector and the vector of the magnetic field returned by the model.

23. Navigation device according to one of Claims 13 to 22, characterised by the fact that the means working out correction parameters are defined in a Kalman type filter in which the measured vector consists of
$d_x$: difference in the X coordinates between the two position estimates,
$d_y$: difference in the Y coordinates between the two position estimates,
in which the state vector associated with this filter is:
$\varepsilon_x$     : adjustment to be made on the X axis
$\varepsilon_y$     : adjustment to be made on the Y axis
$\varepsilon\psi$     : heading adjustment to be made
$\varepsilon_k$     : error on the odometer scale factor.

24. Navigation device according to one of Claims 13 to 23, characterised by the fact that it comprises means (116) suitable for correcting the data coming from the magnetometer (112) on the basis of data corresponding to the magnetic state of the moving body.

## FIG.1
## Etat de la technique

## FIG.2 Invention

FIG_3

EP 0 389 318 B1

```
                                    ┌──────────────────┐
          ┌──212                    │  Mesure  distance │──210
┌─────────────────────┐            └─────────┬────────┘
│  Mesure du champ    │                      │
│  géomagnétique      │            ┌─────────┴────────┐
└──────────┬──────────┘            │ Correction éventuelle│──230
           │                       └─────────┬────────┘
┌──────────┴──────────┐                      │
│  Détermination  état │──218       ┌─────────┴────────┐
│ magnétique du mobile │            │ Calcul   position │──214
└──────────┬──────────┘            └─────────┬────────┘
216                                          │
┌──────────┴──────────────┐          non  ╱Déplacement╲  oui
│ Correction champ sur base │        ─────┤   sur trajet ├─────
│ −état magnétique          │             ╲   connu    ╱
│ −paramètres préétablis    │                  │
│  (trajectoire −position)  │                 240
└──────────┬──────────────┘
           │
┌──────────┴──────────┐
│  Mesure   attitude  │──224
└──────────┬──────────┘
        238
      non ╱ Mobile ╲ oui
     ────┤ incliné  ├────
          ╲        ╱   222
              │    ┌──────────┴──────────┐
              │    │   Correction        │
              │    │   verticalité       │
              │    └──────────┬──────────┘
┌──────────┴──────────┐
│ Génération  modèle  │
228  │      champ          │
└──────────┬──────────┘
┌──────────┴──────────┐
226 │ Détermination   cap │
└─────────────────────┘
```

Mesure du champ géomagnétique — 212

Détermination état magnétique du mobile — 218

216 — Correction champ sur base
−état magnétique
−paramètres préétablis
(trajectoire −position)

Mesure attitude — 224

238 — Mobile incliné — non / oui

222 — Correction verticalité

228 — Génération modèle champ

226 — Détermination cap

Mesure distance — 210

Correction éventuelle — 230

Calcul position — 214

Déplacement sur trajet connu — 240 — non / oui

non — Visualisation position estimée — 242

oui — • Appel, base de données cartographiques
•Recalage position
• Visualisation position recalée — 244

220 — Elaboration de paramètres de correction

FIG_4